(19) Europäisches Patentamt
European Patent Office
Office européen des brevets

(11) Veröffentlichungsnummer: **0 256 261 B1**

# (12) EUROPÄISCHE PATENTSCHRIFT

(45) Veröffentlichungstag der Patentschrift: **04.12.91**

(51) Int. Cl.5: **C08F 297/04**, B60C 1/00

(21) Anmeldenummer: **87109153.4**

(22) Anmeldetag: **25.06.87**

## (54) ABC-Blockcopolymerisate auf Basis von Butadien und Isopren, Verfahren zu ihrer Herstellung und ihre Verwendung.

(30) Priorität: **14.08.86 DE 3627675**
**18.09.86 DE 3631706**
**26.03.87 DE 3710002**

(43) Veröffentlichungstag der Anmeldung:
**24.02.88 Patentblatt 88/08**

(45) Bekanntmachung des Hinweises auf die Patenterteilung:
**04.12.91 Patentblatt 91/49**

(84) Benannte Vertragsstaaten:
**AT BE CH DE ES FR GB IT LI LU NL SE**

(56) Entgegenhaltungen:
**EP-A- 0 173 791**
**FR-A- 1 574 421**
**US-A- 3 954 696**

(73) Patentinhaber: **HÜLS AKTIENGESELLSCHAFT**
**Patentabteilung / PB 15 - Postfach 13 20**
**W-4370 Marl 1(DE)**

(72) Erfinder: **Herrmann, Christoph, Dr.**
**Siedlungsstrasse 3**
**W-4370 Marl(DE)**
Erfinder: **Hellermann, Walter, Dr.**
**Waldstrasse 16**
**W-4270 Dorsten 21(DE)**
Erfinder: **Wolpers, Jürgen, Dr.**
**Hetfeld 15 c**
**W-4358 Haltern(DE)**
Erfinder: **Nordsiek, Karl-Heinz, Dr.**
**Neumarktstrasse 4**
**W-4370 Marl(DE)**
Erfinder: **Fuchs, Hans-Bernd, Dr.**
**Leverkusener Strasse 12**
**W-4370 Marl(DE)**
Erfinder: **Von Portatius, Hans-Eberhard, Dr.**
**Am Gecksbach 40**
**W-4270 Dorsten 11(DE)**

**EP 0 256 261 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ungesättigte elastomere ABC-Blockcopolymerisate auf Basis von Butadien, Isopren und gegebenenfalls Styrol, ihre Herstellung und ihre Verwendung zur Herstellung von Reifenlaufflächen.

Bekanntlich werden an Kautschuke, die im Reifensektor eingesetzt werden, folgende Anforderungen gestellt:

- Der kalte Fluß soll möglichst gering sein.
- Die Kautschuke sollen bei den sich anschließenden Mischprozessen gut verarbeitbat sein.
- Die Kautschuke sollen bei den Verformungsprozessen fließfähig sein.
- Die Kautschuke sollen gut vulkanisierbar sein.

Darüber hinaus sind die Forderungen zu berücksichtigen, die sich aus ihrem Einsatzgebiet im Reifensektor ergeben. Bekanntlicherweise werden an Reifenlaufflächen in jüngster Zeit erhöhte Anforderungen gestellt:

a) Sie sollen auch bei tiefen Temperaturen noch hoch elastisch sein.

b) Sie sollen eine gute Naßrutschfestigkeit aufweisen.

c) Sie sollen einen hohen Abriebwiderstand aufweisen und dementsprechend eine lange Lebensdauer haben.

d) Sie sollen bei dynamischer Beanspruchung möglichst wenig Wärme bilden. Ihr Rollwiderstand soll möglichst klein sein, damit der Treibstoffverbrauch des Fahrzeugs möglichst niedrig ist.

Es ist bekannt, daß Kautschuke bei der Prüfung im Torsionsschwingungsversuch eine Temperaturabhängigkeit des logarithmischen Dekrementes der mechanischen Dämpfung und daraus abgeleitet eine Temperaturabhängigkeit des mechanischen Verlustfaktors tan delta aufweisen, die in der graphischen Darstellung einem für den jeweiligen Kautschuk charakteristischen Kurvenverlauf entspricht. Die gewünschten Anforderungen an die Reifenlaufflächen stellen sich vorzugsweise dann ein, wenn die tan delta-Kurve einen möglichst breiten Schwingungsdämpfungsbereich aufweist (vgl. K. H. Nordsiek, Kautschuk und Gummi, Kunststoffe 38, 178 (1985) und 39, 599 (1986).

Es ist auch bekannt, daß diese sich teilweise widersprechenden Eigenschaften der Reifenlaufflächen ganz wesentlich durch die Art und Zusammensetzung der zu diesem Zweck eingesetzten Kautschuke bestimmt werden. Homopolymere auf Basis der üblicherweise eingesetzten monomeren Rohstoffe, wie Butadien, Isopren und Styrol erfüllen diese Bedingungen noch nicht befriedigend (vgl. EP-A-0 054 204 und JP-A-82/87 406).

Verschnitte von Kautschuksorten weisen in der Praxis den Nachteil auf, daß das aufgeführte Eigenschaftsspektrum nicht erreicht und die gewünschte reifentechnische Qualität nicht zuverlässig reproduziert wird. Es besteht daher ein Bedarf an Kautschuken, die den oben genannten Eigenschaftsvorstellungen möglichst weit entgegen kommen. Dieses Ziel sollte sich grundsätzlich mit Kautschuken erreichen lassen, die aus Polymeren mit unterschiedlichen Blöcken bestehen.

Als Blöcke eines Polymeren sollen im Rahmen dieser Erfindung nicht nur die Kettensegmente angesehen werden, die aus unterschiedlichen Monomerbausteinen bestehen, sondern auch jene Segmente, die sich - bedingt durch die äußeren Verfahrensparameter - in der Art der Verknüpfung der Monomerbausteine oder in dem Anteil, in dem sie in ein Kettensegment eingebaut sind, unterscheiden.

Das Butadien-Isopren-Copolymer, das in der EP-A-0 054 204 beschrieben wird, weist zwar in seinem Anfangs- und Endteil einen unterschiedlichen Gehalt an Isopren auf, der auf die geringere Polymerisationsneigung von Isopren im Vergleich zu Butadien zurückzuführen ist, ist aber in dem soeben erläuterten Sinne nicht als Blockcopolymer anzusprechen.

Auch wenn man während der Copolymerisation von Dienen und Styrol den Styrolanteil verändert (vgl. DE-A-31 08 583), erhält man kein Blockcopolymer, sondern fließende Übergänge. Die gewünschte Verbesserung der reifentechnischen Eigenschaften ist auch hier noch unzureichend. Die DE-A-31 08 583 beschreibt 1-phasige Kautschuksysteme mit einem Dämpfungsmaxmium, das von einem Glasübergangspunkt in einem sehr engen Temperaturbereich verursacht wird.

Eine Verbesserung wird erst dadurch erreicht, daß man ein Copolymer aus zwei unterschiedlichen Blöcken A und B herstellt, die sich in ihrer Struktur und/oder Zusammensetzung unterscheiden.

So beschreibt z. B. die DE-A-31 51 139 ein statistisches Styrol-Butadien-Blockcopolymer. Die Blöcke unterscheiden sich in ihrem Butadiengehalt und dem Gehalt an Vinylbindungen. Sie sind so miteinander vermischt, daß sie verträglich sind und daß anstelle von 2 getrennten lediglich eine einzige Dämpfungsspitze entsteht.

In der DE-A-35 30 438 werden Kautschukmassen beansprucht, die mindestens 20 % eines Styrol-Butadien-Blockcopolymeren enthalten. Die Blöcke unterscheiden sich im Styrolgehalt, im Gehalt an Vinylbindungen und - daraus folgend - in der Glasübergangstemperatur. Die tan delta-Kurve weist auch in diesem Falle lediglich einen schmalen Temperaturbereich maximaler Dämpfung auf.

Die japanische Offenlegungsschrift 83/122 907 beschreibt verzweigte Kautschuke, die durch Umsetzung einer z. B. metallischen Tetrahalogenverbindung, wie $SnCl_4$, mit Blockcopolymeren, bestehend aus einem Polyisopren- und einem Polybutadienblock, erhältlich sind. Jeder der beiden Blöcke besteht also aus einem Homopolymeren. Der nach Umsetzung mit dem metallischen Kupplungsmittel erhaltene sternförmige Kautschuk bildet ein 1-phasiges Kautschuksystem mit einem Glasübergangspunkt aus.

Die GB-B-2 090 840 beschreibt Blockcopolymere, die durch Polymerisation von Dienen bzw. Copolymerisation von Diengemischen erhalten werden und deren Blöcke sich im Gehalt an 1,2- und/oder 3,4-Struktureinheiten um 20 bis 50 Mol-% unterscheiden. Die Herstellung solcher Blockcopolymere erfolgt in Gegenwart unterschiedlicher Mengen an Cokatalysator oder bei unterschiedlichen Temperaturen.

Die EP-A-0 173 791 beschreibt Laufstreifen, deren Kautschukkomponente zu 30 bis 100 % aus Blockcopolyerisaten auf Basis von Butadien, Isopren und gegebenenfalls Styrol und/oder Piperylen bestehen kann. Die Blockcopolymerisate werden in Gegenwart von Cokatalysatoren unter Erhöhung der Temperatur hergestellt und können AB- oder ABC-Struktur aufweisen. Die Polymerisate enthalten stets einen Endblock auf Basis von Butadien, der bei steigender Temperatur hergestellt wird und infolgedessen einen vergleichsweise hohen Anteil an 1,2-Struktureinheiten und eine ungleichmäßige Verteilung der Vinylgruppen aufweist. Auch diese Blockcopolymerisate ergeben noch nicht tan delta-Kurven mit einem hinreichend breiten Plateau, um alle Reifeneigenschaften optimal zu erfüllen (siehe Vergleichsversuch A). Daher wird bereits in dieser Schrift vorgeschlagen, die erhaltenen Blockcopolymerisate mit anderen Kautschukkomponenten zu verschneiden (siehe Anspruch 1 und Beispiel 2).

Allen aufgeführten Blockcopolymeren haftet mindestens einer der folgenden Mängel an:

1. Die Blockcopolymeren werden den oben genannten Anforderungen im Hinblick auf ihre Verwendung als Reifenmaterial nicht befriedigend gerecht.
2. Es treten Probleme in der Verträglichkeit der beiden Blöcke auf.
3. Die tan delta-Kurve weist nur ein schmales Dämpfungsmaximum auf.
4. Es werden große Mengen des vergleichsweise teuren Isoprens benötigt.

Ziel der vorliegenden Erfindung war es, ABC-Blockcopolymerisate auf Basis von Isopren und Butadien zu entwickeln, die eine tan-delta-Kurve mit so breitem Schwingungsdämpfungsbereich aufweisen, daß eine Zumimischung von weiteren Kautschukkomponenten zur Erweiterung des Schwingungsdämpfungsbereichs nicht mehr erforderlich ist. Vorzugsweise sollte dieser Schwingungsdämpfungsbereich zwischen -90 °C und + 30 °C liegen.

Es wurden jetzt überraschend ABC-Blockcopolymerisate auf Basis von 45 bis 80 % Butadien, 5 bis 40 % Isopren und 0 bis 30 % Styrol gefunden. Diese bestehen aus

40 bis 75 % eines Blockes A, der ausschließlich Butadieneinheiten mit einem Gehalt an gleichmäßig verteilten Vinylgruppen von weniger als 15 % enthält,

6 bis 25 % eines Blockes B, der
- entweder Butadien- und Isopreneinheiten mit einem Vinylgehalt von weniger als 15 %
- oder Butadieneinheiten mit einem Vinylgehalt von mehr als 75 %

enthält, und

20 bis 55 % eines Blockes C, der Butadien- und Isopreneinheiten mit einem Vinylgehalt von mehr als 75 % enthält.

Vorzugsweise beträgt der Anteil der Isopreneinheiten im Block B maximal 33 %. Vorzugsweise beträgt der Anteil der Butadieneinheiten im Block C 5 bis 40 %.

Der Block B und/oder C kann Styrol in Mengen bis zu 40 % enthalten. Die ABC-Blockcopolymerisate können sowohl linear als auch verzweigt sein. Die Verzweigung kann mit Hilfe eines Verzweigungsmittels während der Polymerisation oder mit Hilfe eines Kupplungsmittels zu Ende der Polymerisation erreicht werden.

Das Verfahren zur Herstellung der Blockcopolymerisate durch anionische Polymerisation der Monomeren in einem inerten organischen Lösemittel in Gegenwart einer Li-organischen Verbindung und eines Cokatalysators ist dadurch gekennzeichnet, daß man zunächst einen Block A durch Polymerisation von Butadien in Abwesenheit eines Cokatalysators herstellt. Danach stellt man einen Block B her, indem man, gegebenenfalls in Gegenwart von Styrol, entweder Butadien und Isopren in Abwesenheit eines Cokatalysators polymerisiert oder indem man die Polymerisation von Butadien in Gegenwart eines Cokatalysators fortsetzt. Anschließend polymerisiert man ein Gemisch aus Butadien und Isopren, gegebenenfalls auch Styrol, in Gegenwart eines Cokatalysators (Block C).

Grundsätzlich besteht die Möglichkeit, zu Beginn der Polymerisation jedes Blockes die für dessen

Herstellung jeweils benötigten Mengen an Monomeren dem Reaktionsgefäß zuzusetzen. Man kann aber auch bereits zu Beginn der Polymerisation des Blockes A die Gesamtmenge Butadien vorlegen und den Block B durch Zugabe des Cokatalysators oder des Isoprens beginnen. Für die Zugabe des Isoprens gelten die gleichen Überlegungen. Die Mitverwendung von Styrol als Comonomeres der Blöcke B und/oder C ist bevorzugt. Weitere Einzelheiten des erfindungsgemäßen Verfahrens sind in den Ansprüchen 10 bis 14 festgehalten.

Gegenstand der Erfindung ist schließlich auch die Verwendung der ABC-Blockcopolymerisate zur Herstellung von Reifenlaufflächen gemäß Anspruch 15.

Im folgenden soll das Verfahren detailliert beschrieben werden.

Als Reaktionsmedium wird ein inertes organisches Lösemittel verwendet. Geeignet sind insbesondere Kohlenwasserstoffe mit 6 bis 12 C-Atomen wie Pentan, Hexan, Heptan, Oktan und Dekan sowie deren cyclische Analogen. Geeignet sind auch aromatische Lösemittel wie z. B. Benzol, Toluol, Xylole, u. a. Selbstverständlich können auch Gemische der vorstehend beschriebenen Lösemittel eingesetzt werden.

Als Katalysator werden Alkyllithiumverbindungen eingesetzt, die durch Umsetzung von Lithium mit den entsprechenden Alkylhalogeniden leicht zugänglich sind. Die Alkylreste weisen 1 bis 10 C-Atome auf. Einzelne Wasserstoffatome können durch Phenylreste substituiert sein. Folgende Alkyllithiumverbindungen sind besonders geeignet: Methyllithium, Ethyllithium, Pentyllithium; bevorzugt wird n-Butyllithium.

Zur Verbesserung des kalten Flusses wird wenigstens eine Polymerisationsstufe vorteilhafterweise in Anwesenheit geringer Mengen eines Verzweigungsmittels, wie z. B. Divinylbenzol (DVB), durchgeführt. Bezogen auf 100 Teile Monomere werden maximal 0,5 Teile DVB eingesetzt. Ein solcher Zusatz entfällt, wenn nach der Polymerisation eine Kupplung vorgesehen ist.

Art und Menge von Katalysator und Verzweigungsmittel werden im allgemeinen so ausgewählt, daß das erhaltene Blockcopolymerisat folgende Eigenschaften aufweist:

Mooney-Viskosität ($ML_{1-4}$, 100 °C, DIN 53 523): 35 bis 120;

Uneinheitlichkeit U = (Mw/Mn) - 1, bestimmt durch gelpermeationschromtografische Analyse (GPC-Analyse): 0,6 bis 3,0;

Defo-Elastizität(80 °C, DIN 53 514): $\geqq$ 20;

Bei dem vorliegenden Verfahren werden einzelne Blöcke in Abwesenheit eines Cokatalysators, andere in Gegenwart eines Cokatalysators durchgeführt.

Im ersten Fall, nämlich in Abwesenheit eines Cokatalysators, arbeitet man bei Temperaturen von 20 bis 120 °C, vorzugsweise von 20 bis 80 °C, und erhält im Falle der Diene Polymerisate, die mehr als 85 % 1,4-Struktureinheiten der allgemeinen Formel

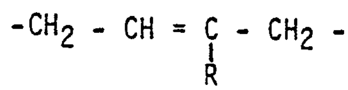

R = H (Butadien)
R = $CH_3$ (Isopren)
aufweisen.

Im zweiten Falle ist man daran interessiert. Polymerisate mit einem möglichst hohen Anteil von 1,2- und/oder 3,4-Struktureinheiten zu erhalten.

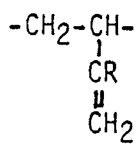 und/oder 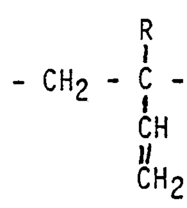

R = H (Butadien)
R = $CH_3$ (Isopren)

Die Auswahl der Cokatalysatoren richtet sich daher nach ihrer Fähigkeit, die Mikrostruktur zu regeln, d. h. den Verlauf der Polymerisation im Hinblick auf eine möglichst vollständige Bildung von 1,2-und/oder 3,4-Struktureinheiten zu lenken.

Der Cokatalysator wird im allgemeinen aus der Gruppe

- der Ether,

- der tertiären Amine oder
- der etherhaltigen tertiären Amine

ausgewählt.

Geeignete Ether umfassen insbesondere

- Dialkylether des Ethylenglykols und Diethylenglykols, deren Alkylgruppen jeweils bis zu 4 C-Atome aufweisen.

Insbesondere bei der Herstellung von verzweigten Blockcopolymeren werden Ether der allgemeinen Formel

$R_1 - O - CH_2 - CH_2 - O - R_2$

bevorzugt, wobei $R_1$ und $R_2$ Alkylreste mit einer unterschiedlichen Zahl von C-Atomen aus der Gruppe Methyl, Ethyl, n- und iso-Propyl sowie n-, iso-, sek.- und tert. Butyl sind. Vorzugsweise beträgt die Summe der C-Atome der beiden Reste $R_1$ und $R_2$ 5 bis 7, insbesondere 6. Ein besonders geeigneter Ethylenglykolether ist die Verbindung mit $R_1$ = Ethyl und $R_2$ = tert. Butyl. Die Glykolether sind beispielsweise nach dem Prinzip der Williamson-Synthese aus einem Natriumalkoholat und einem Alkylalogenid zugänglich. Die Ether der Formel

$R_1 - O - CH_2 - CH_2 - O - C(CH_3)_3$

können in einfacher Weise durch Umsetzung des entsprechenden Alkohols

$R_1 - O - CH_2 - CH_2 - OH$

mit Isobuten in Gegenwart eines sauren Ionenaustauschers hergestellt werden.

Geeignete tertiäre Amine sind z. B. N,N,N',N'-Tetramethylethylendiamin, N,N,N',N'-Tetraethylethylendiamin und Triethylendiamin.

Geeignete etherhaltige Amine sind N-Methylmorpholin und N-Ethylmorpholin.

Der Cokatalysator wird in einem Verhältnis von 2 : 1 bis 30 : 1, insbesondere 2 : 1 bis 15 : 1, bezogen auf die Molzahl des Katalysators eingesetzt. Bei höheren Temperaturen werden im allgemeinen größere Mengen an Cokatalysator benötigt, um die gewünschte Mikrostrukturregelung zu erzielen. Reaktionstemperaturen von 100 °C sollten nicht überschritten werden. Die Polymerisation wird zweckmäßigerweise bei konstanter Temperatur durchgeführt. Es ist auch möglich, bei steigender oder fallender Temperatur zu arbeiten; jedoch ist in diesem Falle dafür Sorge zu tragen, daß die Mikrostruktur nicht grundsätzlich verändert wird.

Bei der Herstellung der Blöcke B und/oder C kann Styrol als Comonomer zugesetzt werden. Durch geeignete Maßnahmen ist dafür Sorge zu tragen, daß der Gehalt an Polystyrolblöcken im ABC-Blockcopolymerisat 2 Massen-% nicht überschreitet. (Ein Verfahren zur Bestimmung des Gehaltes an Polystyrolblöcken ist in dem Standardwerk Houben-Weyl "Methoden der Organischen Chemie", Band 14/1 (1061), Seite 698 angegeben.) Es ist auch möglich, dem Block C eine Teilmenge des Styrols gegen Ende der Polymerisation zuzusetzen.

Es ist bekannt, daß einige als Cokatalysatoren vorgeschlagene Verbindungen die Eigenschaft haben, die Ausbildung von Polystyrolblöcken zu unterdrücken. Die gleiche Eigenschaft haben Verbindungen, die als Randomizer bezeichnet werden und meist Kaliumsalze von Alkoholaten sowie organischen Carbon- und Sulfonsäuren sind.

Gemäß einer besonderen Ausführungsform des Verfahrens können die nach Abschluß der Polymerisation vorliegenden "lebenden Polymere" mit einem Kupplungsmittel zu verzweigten oder sternförmigen Blockcopolymerisaten umgesetzt werden.

Geeignete Kupplungsmittel sind Polyepoxide wie epoxidiertes Leinsamenöl, Polyisocyanate, Polyketone wie 1,3,6-Hexantrion, Polyanhydride wie beispielsweise das Dianhydrid der Pyromellithsäure und Dicarbonsäureester wie Adipinsäuredimethylester. Besonders geeignet sind

- die Tetrahalogenide der Elemente Si, Ge, Sn und Pb, insbesondere $SiCl_4$,
- organische Verbindungen der allgemeinen Formel $R_n[SiHal_3]_n$, mit n = 1 bis 6, insbesondere n = 1 und 2. Hierbei ist R ein n-wertiger organischer Rest, beispielsweise ein aliphatischer, cycloaliphatischer oder aromatischer Rest. Beispielhaft seien 1,2,4-Tris(2-trichlorsilylethyl)-cyclohexan, 1,8-Bis-(trichlorsilyl)-octan und 1-(Trichlorsilyl)-octan genannt.
- organische Verbindungen, die mindestens einmal die Gruppierung > $SiHal_2$ enthalten, wie z. B. Dimethylsilylchlorid.

- Halogensilanwasserstoffe der allgemeinen Formel $Si(H)_m(Hal)_{4-m}$ mit $3 \geqq m \geqq 1$
- Di- und Trivinylbenzole, wie z. B. 1,4-Divinylbenzol.

Bei der Kupplung sind zwei Fälle zu unterscheiden. Besteht der Block C ausschließlich aus Butadien und Isopren, ist jedes der vorstehend genannten Kupplungsmittel geeignet. Enthält der Block C auch eingebaute Styroleinheiten, hat es sich als zweckmäßig erwiesen, als Kupplungsmittel Divinylbenzol zu verwenden.

Das Verfahren kann sowohl diskontinuierlich wie kontinuierlich betrieben werden.

Mit Hilfe der tan delta-Kurve ist der Fachmann in der Lage, durch Variation der Reaktionsbedingungen Blockcopolymerisate herzustellen, die zu Reifenlaufflächen mit den gewünschten Eigenschaftskombinationen verarbeitet werden können.

Die erhaltenen amorphen Polymerisate werden, wenn sie zu Vulkanisaten verarbeitet werden sollen, mit aktiven, verstärkenden Füllstoffen, einem Vulkanisationsmittel und üblichen Zusatzstoffen gemischt. Im allgemeinen ist es erforderlich, diese Vermischung unter Einwirkung von Scherkräften durchzuführen.

Massen, welche zur Herstellung von Reifenlaufflächen bestimmt sind, werden im allgemeinen zu Rohlaufstreifen geformt. Bei der Homogenisierung und Formgebung, die beispielsweise in einem Extruder erfolgen kann, werden die Bedingungen von Temperatur und Zeit so gewählt, daß keine Vulkanisation eintritt.

Die Kautschukkomponente in den vulkanisierbaren Massen besteht beispielsweise zu 70 bis 100 Massen-% aus einem Blockcopolymerisat der Erfindung und 0 bis 30 Massen-% eines Kautschuks aus der Gruppe der bekannten, amorphen Allzweckkautschuke wie z. B. Styrol-Butadien-Kautschuk, 1,4-cis-Polybutadien, 1,4-cis-Polyisopren und Naturkautschuk.

Aktive, verstärkende Füllstoffe sind beispielsweise Reifenlaufflächenruße unterschiedlicher Aktivität, gegebenenfalls mit Silan-Haftvermittlern behandelte, hochdisperse Kieselsäuren und ihre Gemische.

Übliche Vulkanisationsmittel enthalten z. B. Schwefel in Kombination mit Beschleunigern. Die Menge des Vulkanisationsmittels richtet sich nach den übrigen Komponenten in der vulkanisierbaren Masse und kann durch einfache, orientierende Versuche ermittelt werden.

Als Zusatzstoff können die in der Kautschuktechnik üblichen Weichmacheröle, bevorzugt aromatische, aliphatische und naphthenische Kohlenwasserstoffe, sowie übliche Hilfsmittel, wie beispielsweise Zinkoxid, Stearinsäue, Harzsäuren, Alterungsschutzmittel und Ozonschutzwachse, in üblichen Mengen zugesetzt werden.

Die erfindungsgemäßen Blockcopolymerisate eignen sich zur Herstellung der Laufflächen von PKW- und LKW-Reifen und zwar sowohl zur Herstellung von Neureifen als auch zur Runderneuerung von Altreifen.

Die Reifenlaufflächen zeichnen sich insbesondere durch folgende vorteilhafte Eigenschaften aus:

- hoher Naßrutschwiderstand
- hoher Abriebwiderstand
- niedriger Rollwiderstand und daher geringer Treibstoffverbrauch
- hohe Verschleißfestigkeit
- Allwettereigenschaften

Als Lösemittel wurde ein Hohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemitel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die, wenn nicht anders angegeben, in Form einer 20gewichtsprozentigen Lösung in Hexan zur Anwendung kam.

Die Monomeren Isopren und Styrol wurden vor ihrem Einsatz 24 Stunden über Calciumhydrid unter Rückfluß gekocht, abdestilliert und mit n-Butyllithium in Gegenwart von o-Phenanthrolin austitriert.

Die Glykolether wurden über Calciumhydrid destilliert und anschließend mit n-Butyllithium in Gegenwart von o-Phenanthrolin austitriert.

Das Divinylbenzol (DVB) stellt ein Gemisch des m- und p-Divinylbenzols dar und wurde in Form einer 64prozentigen Lösung in Hexan eingesetzt. Die Bestimmung des Umsatzes erfolgte, indem man den Feststoffgehalt nach Abdampfen des Lösemittels und der Monomeren bestimmte.

Die tan delta-Kurven wurden mit einem dynamischen Viscoelastometer (Typ Rheovibron der Firma Toyo Measuring Instruments Co. Ltd., Japan) bei einer Schwingung von 1 Hz aufgenommen (vgl. D. J. Massa J. Appl. Physics 44, 2595 (1973).

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit der GPC-Analyse, wobei Tetrahydrofuran als Lösemittel und Polystyrol als Säulenmaterial eingesetzt wird. Die

Polymerisate werden mit einem Lichtstreuungsdetektor charakterisiert. Zu diesem Zweck werden dem Reaktor vor Zugabe des Kupplungsmittels und zu Ende der Reaktion Proben entnommen.

Teile bedeuten Massenteile, Prozent (%) Massen-%.

Beispiel 1

In einem mit trockenem Stickstoff gespülten, ersten V2A-Rührautoklaven wurden 225 Teile Hexan (technischer $C_6$-Schnitt), 46,5 Teile 1,3-Butadien und 0,20 Teile DVB vorgelegt. Die Polymerisation wurde bei 50 °C durch Zugabe von 0,54 Teilen n-Butyllithium gestartet. Die Temperatur stieg trotz Kühlung kurzzeitig bis auf maximal 58 °C. Nach 75 Minuten, nachdem das vorgelegte 1,3-Butadien praktisch vollständig umgesetzt war, wurde eine IR-Probe entnommen.

Unmittelbar danach wurde innerhalb von 3 Minuten der Inhalt eines zweiten V2A-Rührautoklaven (50 °C) zugegeben. Dieser enthielt eine mit n-Butyllithium titrierte Lösung von 20,2 Teilen 1,3-Butadien und 33,3 Teilen Isopren in 180 Teilen Hexan. 10 Minuten später wurden zwei Proben entnommen. Die erste Probe ergab, daß 60 Prozent der insgesamt eingesetzten Monomeren umgesetzt waren. Die zweite Probe diente zur IR-Analyse.

Unmittelbar danach wurden 0,85 Teile Diethylenglykoldimethylether zugegeben. Die Temperatur wurde konstant gehalten. 3 Stunden nach dem Start wurde die Polymerisation durch Zugabe einer Lösung von 0,5 Teilen 2,2'-Methylen-bis-(4-methyl-6-tertiärbutylphenol) in 2 Teilen feuchtem Toluol gestoppt. Das Lösemittel und unumgesetztes Isopren wurden mit Wasserdampf abdestilliert und das Polymerisat 24 Stunden bei 70 °C im Umlufttrockenschrank getrocknet.

Beispiel 2

In einem ersten Rührautoklaven wurde eine titrierte Lösung von 284 Teilen Hexan, 65 Teilen 1,3-Butadien und 0,054 Teilen DVB vorgelegt. Die Polymerisation wurde bei 40 °C durch Zugabe von 0.056 Teilen n-Butyllithium gestartet. Die Temperatur wurde durch Kühlung im Bereich von 40 bis 42 °C gehalten. Nach 26 Minuten, nachdem das vorgelegte 1,3-Butadien zu 90 Prozent umgesetzt war, wurden 0,7 Teile Glykoldiethylether zugegeben. Nach weiteren 30 Minuten, nachdem das 1,3-Butadien praktisch vollständig umgesetzt war, wurde eine IR-Probe entnommen.

Unmittelbar danach wurde innerhalb von 2 Minuten der Inhalt eines zweiten Rührautoklaven (50 °C) zugegeben. Dieser enthielt eine mit Butyllithium titrierte Lösung von 10 Teilen 1,3-Butadien und 25 Teilen Isopren in 200 Teilen Hexan. Die Temperatur wurde im Bereich von 45 bis 48 °C gehalten. Nachdem die Monomeren praktisch vollständig umgesetzt waren (etwa 2,5 Stunden), wurde die Polymerisation gestoppt und das Polymerisat aufgearbeitet.

Beispiel 3

In einem ersten Rührautoklaven wurde eine titrierte Lösung von 270 Teilen Hexan, 70 Teilen 1,3-Butadien und 0,054 Teilen DVB vorgelegt. Die Polymerisation wurde bei 40 °C durch Zugabe von 0,056 Teilen n-Butyllithium gestartet. Die Temperatur wurde durch Kühlung im Bereich von 40 bis 44 °C gehalten. Nach 25 Minuten, nachdem das vorgelegte 1,3-Butadien zu 67 Prozent umgesetzt war, wurden 0,7 Teile Glukoldiethylether zugegeben. Nach weiteren 30 Minuten, nachdem das 1,3-Butadien praktisch vollständig umgesetzt war, wurde eine IR-Probe entnommen.

Unmittelbar danach wurde innerhalb von 1,5 Minuten der Inhalt eines zweiten Rührautoklaven (50 °C) zugegeben. Dieser enthielt eine mit Butyllithium titrierte Lösung von 3 Teilen 1,3-Butadien, 16 Teilen Isopren und 11 Teilen Styrol in 146 Teilen Hexan. Die Temperatur wurde im Bereich von 47 bis 50 °C gehalten. Nachdem die Monomeren praktisch vollständig umgesetzt waren (etwa 115 Minuten), wurde die Polymerisation gestoppt und das Polymerisat aufgearbeitet.

Beispiel 4

In einem V2A-Rührautoklaven wurden 335 Teile Hexan, 60 Teile 1,3-Butadien und 0,035 Teile DVB vorgelegt. Die Polymerisation wurde bei 50 °C durch Zugabe von 0,555 Teilen n-Butyllithium gestartet und die Reaktionstemperatur durch Kühlung zwischen 50 und 52 °C gehalten. Nachdem das vorlegte 1,3-Butadien praktisch vollständig umgesetzt war (nach 174 Minuten), wurde eine IR-Probe entnommen.

Unmittelbar danach wurde innerhalb von 75 Sekunden der Inhalt eines zweiten V2A Rührautoklaven zugegeben. Dieser enthielt eine mit Butyllithium titrierte Lösung von 10 Teilen 1,3-Butadien, 15 Teilen

Isopren und 15 Teilen Styrol in 187 Teilen Hexan mit einer Temperatur von 50 °C. 4 Minuten danach wurden 2 Proben entnommen. Die erste Probe ergab, daß 68 Prozent der insgesamt eingesetzten Monomeren umgesetzt waren. Die zweite Probe diente zur IR-Analyse.

Unmittelbar danach wurde 1 Teil Glykoldiethylether zugesetzt und die Temperatur bei 50 °C gehalten. 4 Stunden nach dem Beginn der Polymerisation wurde eine Lösung von 0,5 Teilen 2,2'-Methlyen-bis-(4-methyl-6-tertiarbutylphenol) in 2 Teilen feuchtem Toluol zugesetzt. Anschließend wurde das Lösemittel mit Hilfe von Wasserdamp abdestilliert und das Polymerisat 24 Stunden bei 70 °C im Umlufttrockenschrank getrocknet.

Vergleichsbeispiel A

Wie auf den Seiten 16, 19 und 20 der EP-OS 0 173 791 beschrieben, wurde deren Blockcopolymerisat 1 hergestellt.

Zeichnung 1 zeigt die tan delta-Kurve von vulkanisierten Probekörpern (hergestellt analog zur Vorschrift für SBR in der ISO 2322-1985 (E) Series A) mit den ABC-Blockcopolymerisaten der Beispiele 1, 3 und 4, sowie von Vergleichsbeispiel A. Es ist deutlich zu erkennen, daß die tan delta-Kurve der erfindungsgemäßen Beispiele 1, 3 und 4 breiter ist als die tan delta-Kurve gemäß Vergleichsbeispiel A (Beispiel 1 der EP-OS 0 173 791).

Prozent-Anteil der Strukturelemente, die durch Polymerisation der folgenden Monomeren erhalten wurden.

| | Butadien | | | Isopren | | Styrol |
|---|---|---|---|---|---|---|
| | 1,4-trans | 1,4-cis | 1,2- | 1,4- | 3,4- | |
| Bsp. 1 | | | | | | |
| Block A | 53 | 38 | 9 | - | - | - |
| Block AB | 52 | 36 | 8 | 3 | < 1 | - |
| Block ABC | 30 | 20 | 23[1)] | 1 | 26 | - |
| Bsp. 2 | | | | | | |
| Block AB | 43 | 33 | 24 | - | - | - |
| Block ABC | 30 | 21 | 25 | 2 | 22 | - |
| Bsp. 3 | | | | | | |
| Block AB | 38 | 28 | 34 | - | - | - |
| Block ABC[2)] | 29 | 21 | 29[1)] | < 1 | 11 | 10 |
| Bsp. 4 | | | | | | |
| Block A | 51 | 37 | 12 | - | - | - |
| Block AB | 51 | 36 | 10 | 2 | 1 | 0,5 |
| Block ABC | 33 | 23 | 15 | 2 | 10 | 17 |
| Bsp. A | | | | | | |
| Block A | 54 | 35 | 11 | | | |
| Block B | 22 | 31 | 47[1)] | | | |

1) einschließlich Isopren-1,2

2) Der Gehalt an Polystyrolblöcken beträgt 0,3 Prozent, bezogen auf das Blockcopolymerisat.

| | Massenteile der Blöcke A, B und C am ABC-Blockcopolymerisat in %[1] | | | Anteil der 1,2-Butadien- und 3,4-Isopreneinheiten im Block C in % |
|---|---|---|---|---|
| | Block A | Block B | Block C | |
| Bsp. 1 | 46 | 14 | 40 | 90 % |
| Bsp. 2 | 59 | 6 | 35 | 90 % |
| Bsp. 3. | 47 | 23 | 30 | 90 % |
| Bsp. 4 | 60 | 8 | 32 | 90 % |

[1] durch Auswertung des IR-Spektrums ermittelt

Tabelle

| Charakterisierung der ABC-Blockcopolmerisate | | | |
|---|---|---|---|
| Beispiel | Mooney-Viskosität | Defo-Elastizität des ABC-Blockcopolymerisats | Uneinheitlichkeit U |
| Bsp. 1 | 87 | 42 | 4,6 |
| Bsp. 2 | 51 | 38 | 1,6 |
| Bsp. 3 | 48 | 30 | 1,4 |
| Bsp. 4 | 54 | 23 | 1,3 |
| A | 76 | 27 | 1,3 |

Vergleichsbeispiel B (gemäß GB-PS 2 090 840)

In einem Rührautoklaven wurden 550 Teile Hexan, 100 Teile Butadien und 0,1 Teile DVB vorgelegt. Die Polymerisation wurde bei 50 °C mit 0,068 Teilen n-Butyllithium gestartet, wobei die Temperatur maximal 54 °C erreichte. Nach 25 Minuten, als ein Umsatz von 45 % erreicht war, wurde eine IR-Probe entnommen. Unmittelbar danach wurden 0,67 Teile Diethylenglykoldimethylether zugesetzt und die Polymerisation fortgesetzt, wobei die Temperatur maximal 56 °C erreichte. Nachdem die Umsetzung abgeschlossen war (etwa nach 60 Minuten), wurde das Reaktionsgemisch in üblicher Weise aufgearbeitet.
Das AB-Blockcopolymerisat wies bei der Glasübergangstemperatur von -67 °C ein schmales Dämpfungsmaximum auf.

Beispiel 5

In einem mit trockenem Stickstoff gespülten V2A-Rührautoklaven wurden 654 Teile Hexan und 67 Teile 1,3-Butadien vorgelegt. Dann wurde auf 50 °C erhitzt und mit einer 5prozentigen Lösung von n-Butyllithium in Hexan unter thermoelektrischer Kontrolle titriert. Die Polymerisation wurde bei 50 °C durch Zugabe von 0,069 Teilen n-Butyllithium gestartet. Die Temperatur wurde durch Kühlung konstant gehalten. Nachdem 70 % des eingesetzten Budatiens umgesetzt waren, wurde eine IR-Probe entnommen und wie das Endprodukt aufgearbeitet.

Unmittelbar danach wurden bei 50 °C 33 Teile Isopren zudosiert, 10 Minuten danach wurden 2 Proben gezogen. Die erste Probe ergab, daß 75 % des insgesamt eingesetzen Butadiens umgesetzt waren. Die zweite Probe diente zur IR-Analyse.

Unmittelbar danach wurden 0,5 Teile Ethylenglykoldiethylether zugegeben. Nach 80 Minuten wurde ein weitere Probe zur GPC-Analyse entnommen.

Danach wurden bei 50 °C 0,7 Teile DVB zugesetzt. Nach 2 Stunden bei 50 °C wurde auf Raumtemperatur abgekühlt und 0,5 Teile 2,2'-Methylenbis(-4-methyl-6-tert.-butylphenol) zugegeben. Der erhaltene Kautschuk wurde mit 4 000 ml eines Gemisches aus Isopropanol und Methanol im Volumenverhältnis 80 : 20 gefällt und 24 Stunden bei 70 °C im Umlufttrockenschrank getrocknet.

Die Auswertung der IR-Analysen führt zu dem Ergebnis, daß der Block C zu 90 % aus Struktureinheiten besteht, die durch 1,2-Polymerisation von 1,3-Butadien und Isopren und durch 3,4-Polymerisation von Isopren erhalten wurden.

Beispiel 6

In einem Rührautoklaven wurden 734 Teile Hexan und 75 Teile 1,3-Butadien auf 50 °C erhitzt und mit einer 5prozentigen n-Butyllithium-Lösung titriert. Die Polymerisation wurde bei 50 °C durch Zugabe von 0,074 Teilen n-Butyllithium gestartet. Die Temperatur wurde durch Kühlung konstant gehalten. Nachdem das Butadien zu 65 % umgesetzt war, wurden 0,56 Teile Ethylenglykoldiethylether zugegeben. Nachdem das 1,3-Butadien zu 85 % umgesetzt war, wurde eine IR-Probe entnommen.

Unmittelbar danach wurden bei 50 °C 25 Teile Isopren zugegeben. Nach 80 Minuten wurde eine weitere Probe zur GPC-Analyse entnommen.

Danach wurden 1,53 Teile DVB zugefügt. Nach 2 Stunden bei 50 °C wurde die Polymerisation gestoppt und das Polymerisat aufgearbeitet. Die Auswertung der IR-Analysen führt zu dem Ergebnis, daß der Block C zu 90 % aus Struktureinheiten besteht, die durch 1,2-Polymerisation von 1,3-Butadien und Isopren und durch 3,4-Polymerisation von Isopren erhalten wurden.

Beispiel 7

In einem Rührautoklaven wurden 643 Teile Hexan und 72 Teile 1,3-Butadien auf 50 °C erhitzt und mit einer 5prozentigen n-Butyllithium-Lösung titriert.

Die Polymerisation wurde bei 50 °C durch Zugabe von 0,068 Teilen n-Butyllithium gestartet. Die Temperatur wurde durch Kühlung konstant gehalten. Nachdem das Butadien zu 65 % umgesetzt war, wurden 0,56 Teile Ethylenglykoldiethylether zugegeben. Nachdem das 1,3-Butadien zu 95 % umgesetzt war, wurde eine IR-Probe entnommen.

Unmittelbar danach wurden bei 50 °C 16,5 Teile Isopren und 11,5 Teile Styrol zugegeben. Nach 80 Minuten wurde eine weitere Probe zur GPC-Analyse entnommen.

Danach wurden 1,38 Teile DVB zugefügt. Nach 2 Stunden bei 50 °C wurde die Polymerisation gestoppt und das Polymerisat aufgearbeitet.

Die Auswertung der IR-Analysen führt zu dem Ergebnis, daß der Block C zu 90 % aus Struktureinheiten besteht, die durch 1,2-Polymerisation von 1,3-Butadien und Isopren, durch 3,4-Polymerisation von Isopren und durch Polymerisation von Styrol erhalten wurden.

Beispiel 8

In einem mit trockenem Stickstoff gespülten V2A-Rührautoklaven wurden 654 Teile Hexan und 67 Teile 1,3-Butadien vorgelegt. Dann wurde auf 50 °C erhitzt und mit einer 5prozentigen Lösung von n-Butyllithium in Hexan unter thermoelektrischer Kontrolle titriert.

Die Polymerisation wurde bei 50 °C durch Zugabe von 0,074 Teilen n-Butyllithium gestartet. Die Temperatur wurde durch Kühlung konstant gehalten. Nachdem das Butadien sich zu 55 % umgesetzt hatte, wurde eine IR-Probe entnommen und wie das Endprodukt aufgearbeitet.

Unmittelbar danach wurden bei 50 °C 33 Teile Isopren zudosiert; 10 Minuten danach wurden 2 Proben gezogen Die erste Probe ergab, daß 58 % des insgesamt eingesetzten Butadiens umgesetzt war. Die zweite Probe diente der IR-Analyse.

Unmittelbar danach wurden 0,76 Teile 1-Ethoxy-2 tert. butoxy-ethan zugegeben. Nach 80 Minuten wurde ein weitere Probe zur GPC-Analyse entnommen.

Danach wurden bei 50 °C 1,51 Teile DVB zugesetzt. Nach 2 Stunden bei 50 °C wurde auf Raumtemperatur abgekühlt und 0,5 Teile 2,2'-Methylen-bis-(4-methyl-6-tert.-butylphenol) zugegeben. Der erhaltene Kautschuk wurde mit 4 000 ml eines Gemisches aus Isopropanol und Methanol im Volumenverhältnis 80 : 20 gefällt und 24 Stunden bei 70 °C im Umlufttrockenschrank getrocknet.

Die Auswertung der IR-Analysen führt zu dem Ergebnis, daß der Block C zu 90 % aus Struktureinheiten besteht, die durch 1,2-Polymerisation von 1,3-Butadien und Isopren und durch 3,4-Polymerisation von Isopren erhalten wurden.

Tabelle

| Charakterisierung der sternförmigen ABC-Blockcopolymerisate gemäß Beispiel 5, 6, 7 und 8 sowie Vergleichsbeispiel A | | | | | |
|---|---|---|---|---|---|
| Nr. | Mooney-Viskosität | Defo-Elastizität | Makrostruktur | | |
| | | | U | Z[1)] | K % [2)] |
| 5 | 63 | 33 | 1,9 | 5 | 80 |
| 6 | 58 | 30 | 2,1 | 8 | 80 |
| 7 | 58 | 26 | 2,45 | 9 | 80 |
| 8 | 60 | 35 | 2,0 | 9 | 85 |

[1)] Z = Zähligkeit, = Zahl der Arme
[2)] K = Kupplungsausbeute

Tabelle: Prozent-Anteil der Strukturelemente, die durch Polymerisation der folgenden Monomeren erhalten wurden

| | Butadien | | | Isopren | | Styrol |
|---|---|---|---|---|---|---|
| | 1,4-trans | 1,4-cis | 1,2- | 1,4- | 3,4- | |
| **Bsp. 5** | | | | | | |
| Block A | 54 | 38 | 8 | - | - | - |
| Block AB | 51 | 33 | 10 | 5 | < 1 | - |
| Block ABC | 32 | 23 | 14[1)] | 4 | 27 | - |
| **Bsp. 6** | | | | | | |
| Block AB | 42 | 30 | 28 | - | - | - |
| Block ABC | 33 | 22 | 24[1)] | 1 | 20 | - |
| **Bsp. 7** | | | | | | |
| Block AB | 41 | 29 | 30 | - | - | - |
| Block ABC | 29 | 21 | 26[1)] | 3 | 10 | 11 |
| **Bsp. 8** | | | | | | |
| Block A | 56 | 36 | 8 | - | - | - |
| Block AB | 54 | 33 | 8 | 4 | < 1 | - |
| Block ABC | 30 | 20 | 20 | 4 | 26 | - |

[1)] einschließlich Isopren-1,2

Zeichnung 2 zeigt die tan delta-Kurve von vulkanisierten Probekörpern (hergestellt analog zur Vorschrift für SBR in der ISO 2322-1985 (E) Series A) mit den ABC-Blockcopolymerisaten der Beispiele 5 und 7.

**Patentansprüche**

**1.** Ungesättigte, elastomere ABC-Blockcopolymerisate auf Basis von

| | |
|---|---|
| 40 bis 80 Masse-% | Butadien-1,3, |
| 5 bis 40 Masse-% | Isopren und |
| 0 bis 30 Masse-% | Styrol, |

bestehend aus drei Blöcken A, B und C, und zwar:

| | |
|---|---|
| 40 bis 75 Masse-% | eines Blockes A, der ausschließlich Butadieneinheiten mit einem Gehalt an gleichmäßig verteilten Vinylgruppen von weniger als 15 Masse-% enthält, |
| bis 25 Masse-% | eines Blockes B, der<br>- entweder Butadien- und Isopreneinheiten mit einem Vinylgehalt von weniger als 15 Masse-%<br>- oder Butadieneinheiten mit einem Vinylgehalt von mehr als 75 Masse-%<br>enthält, und |
| 20 bis 55 Masse-% | eines Blockes C, der Butadien- und Isopreneinheiten mit einem Vinylgehalt von mehr als 75 Masse-% enthält. |

2. ABC-Blockcopolymerisate gemäß Anspruch 1,
dadurch gekennzeichnet,
daß der Anteil der Isopreneinheiten im Block B 0 bis 33 Masse-% beträgt.

3. ABC-Blockcopolymerisate gemäß Anspruch 1,
dadurch gekennzeichnet,
daß der Anteil der Butadieneinheiten im Block C 5 bis 40 Masse% beträgt.

4. ABC-Blockcopolymerisate gemäß den Ansprüchen 1 bis 3,
dadurch gekennzeichnet,
daß der Block B und/oder C Styrol in Mengen bis 40 Masse-% enthält.

5. ABC-Blockcopolymerisate gemäß den Ansprüchen 1 bis 4,
dadurch gekennzeichnet,
daß die Blockcopolymerisate mit Verzweigungs- oder Kupplungsmitteln verzweigt sind.

6. Verfahren zur Herstellung der ABC-Blockcopolymerisate gemäß Anspruch 1 durch anionische Polymerisation der Monomeren in einem inerten organischen Lösemittel in Gegenwart einer Li-organischen Verbindung und eines Cokatalysators,
dadurch gekennzeichnet,
daß man

a) zunächst einen Block A herstellt, indem man Butadien in Abwesenheit eines Cokatalysators polymerisiert,
b) dann einen Block B herstellt, indem man ein Gemisch aus Butadien und Isopren in Abwesenheit eines Cokatalysators polymerisiert, oder Butadien in Gegenwart eines Cokatalysators polymerisiert, und
c) einen Block C herstellt, indem man ein Gemisch aus Butadien und Isopren in Gegenwart eines Cokatalysators polymerisiert.

7. Verfahren nach Anspruch 6,
dadurch gekennzeichnet,
daß man bereits zu Beginn der Polymerisation die gesamte Butadienmenge vorlegt und den Block B durch Zugabe des Cokatalysators oder des Isoprens beginnt.

8. Verfahren nach den Ansprüchen 6 und 7,
dadurch gekennzeichnet,
daß man bereits im Verfahrensschritt b) die gesamte Menge Isopren vorlegt und die Polymerisation des Blokkes C durch Zugabe des Cokatalysators beginnt.

9. Verfahren nach den Ansprüchen 6 bis 8,
dadurch gekennzeichnet,
daß man in den Verfahrensschritten b) und/oder c) Styrol als Comonomer zusetzt.

10. Verfahren nach den Ansprüchen 6 bis 9,
dadurch gekennzeichnet,

daß man eine Alkyllithiumverbindung einsetzt.

11. Verfahren nach den Ansprüchen 6 bis 10,
dadurch gekennzeichnet,
daß man als Cokatalysatoren Glykolether der Formel $R_1(O\text{-}CH_2\text{-}CH_2)_n\text{-}O\text{-}R_2$ einsetzt, wobei n = 1 oder 2 und $R_1$ und $R_2$ jeweils für einen Alkylrest mit 1 bis 4 C-Atomen stehen.

12. Verfahren nach Anspruch 11,
dadurch gekennzeichnet,
daß n = 1 und die Alkylreste $R_1$ und $R_2$ des Glykolethers eine unterschiedliche Anzahl von C-Atomen aufweisen.

13. Verfahren nach den Ansprüchen 6 bis 12,
dadurch gekennzeichnet,
da0 man die nach vollständiger Polymerisation erhaltenen Polymeren mit einem Kupplungsmittel umsetzt.

14. Verfahren nach den Ansprüchen 6 bis 13,
dadurch gekennzeichnet,
daß man wenigstens einen der Verfahrensschritte der Polymerisation in Gegenwart von Divinylbenzol durchführt.

15. Verwendung der ABC-Blockcopolymerisate gemäß den Ansprüchen 1 bis 5 zur Herstellung der Laufflächen von Reifen.

## Claims

1. An unsaturated, elastomeric ABC block copolymer based on
40 to 80% by weight of 1,3-butadiene,
5 to 40% by weight of isoprene and
0 to 30% by weight of styrene,
composed of three blocks A, B and C, that is to say:
40 to 75% by weight of a block A which contains exclusively butadiene units having a content of less than 15% by weight of uniformly distributed vinyl groups,
up to 25% by weight of a block B which contains
   - either butadiene and isoprene units having a vinyl content of less than 15% by weight
   - or butadiene units having a vinyl content of more than 75% by weight,

and
20 to 55% by weight of a block C which contains butadiene and isoprene units having a vinyl content of more than 75% by weight.

2. An ABC block copolymer according to claim 1, characterised in that the amount of isoprene units in block B is 0 to 33% by weight.

3. An ABC block copolymer according to claim 1, characterised in that the amount of butadiene units in block C is 5 to 40% by weight.

4. An ABC block copolymer according to any of claims 1 to 3, characterised in that the blocks B and/or C contain styrene in amounts of up to 40% by weight.

5. An ABC block copolymer according to any of claims 1 to 4, characterised in that the block copolymer is branched with a branching or coupling agent.

6. A process for the preparation of the ABC block copolymer according to claim 1 by anionic polymerisation of the monomers in an inert organic solvent in the presence of an organolithium compound and of a cocatalyst, characterised in that
   a) first a block A is prepared by polymerising butadiene in the absence of a cocatalyst,
   b) then a block B is prepared by polymerising a mixture of butadiene and isoprene in the absence of

a cocatalyst or polymerising butadiene in the presence of a cocatalyst and
c) a block C is prepared by polymerizing a mixture of butadiene and isoprene in the presence of a cocatalyst.

7. A process according to claim 6, characterised in that the total amount of butadiene is introduced at the beginning of the polymerisation, and block B is started by adding the cocatalyst or the isoprene.

8. A process according to either of claims 6 and 7, characterised in that the total amount of isoprene is introduced in process step b), and the polymerisation of block C is started by adding the cocatalyst.

9. A process according to any of claims 6 to 8, characterised in that styrene is added as comonomer in process steps b) and/or c).

10. A process according to any of claims 6 to 9, characterised in that an alkyllithium compound is used.

11. A process according to any of claims 6 to 10, characterised in that a glycol ether of the formula $R_1(O-CH_2-CH_2)_n-O-R_2$, in which n = 1 or 2 and $R_1$ and $R_2$ are each an alkyl radical of 1 to 4 C atoms, is used as cocatalyst.

12. A process according to claim 11, characterised in that n = 1 and the alkyl radicals $R_1$ and $R_2$ of the glycol ether have a different number of C atoms.

13. A process according to any of claims 6 to 12, characterised in that the polymer obtained after complete polymerisation is reacted with a coupling agent.

14. A process according to any of claims 6 to 13, characterised in that at least one of the process steps of the polymerisation is carried out in the presence of divinylbenzene.

15. A use of the ABC block copolymer according to any of claims 1 to 5 for the production of tyre treads.

**Revendications**

1. Produits de copolymérisation an bloc de type ABC, insaturés et élastomères, à base de
40 à 80 % en masse de butadiène-(1.3).
5 à 40 % en masse d'isoprène et
zéro à 30 % en masse de styrène

composés de trois blocs A, B et C, et plus précisément :

de 40 à 75 % en masse d'un bloc A qui contient exclusivement des unités butadiène ayant une teneur de moins de 15 % en masse de groupes vinyle uniformément répartis,

d'un pourcentage en masse allant jusqu'à 25 % d'un bloc B qui contient
- soit des unités butadiène et isoprène d'une teneur de moins de 15 % en masse de groupes vinyle uniformément répartis,
- soit des unités butadiène d'une teneur en vinyle de plus de 75 % en masse, et

de 20 à 55 % en masse d'un bloc C qui contient des unités butadiène et isoprène d'une teneur en vinyle de plus de 75 % en masse.

2. Produits de copolymérisation en bloc de type ABC suivant la revendication 1,
caractérisés par le fait que la fraction des unités isoprène dans le bloc B fait de zéro à 33 % en masse.

3. Produits de copolymérisation en bloc de type ABC suivant la revendication 1,
caractérisés par le fait que la fraction des unités butadiène dans le bloc C est de 5 à 40 % en masse.

4. Produits de copolymérisation en bloc de type ABC suivant les revendications 1 et 3,
caractérisés par le fait que le bloc B et/ou le bloc C contien(nen)t du styrène dans des proportions

allant jusqu'à 40 % en masse.

**5.** Produits de copolymérisation en bloc de type ABC suivant les revendications 1 et 4, caractérisés par le fait que les produits de copolymérisation en bloc sont ramifiés par des agents de ramification ou de copulation.

**6.** Procédé de préparation des produits de copolymérisation en bloc de type ABC suivant la revendication 1 par polymérisation anionique des monomères dans un solvant organique inerte en présence d'un composé organique du lithium et d'un co-catalyseur, caractérisé par le fait

a) qu'on fabrique tout d'abord un bloc A par polymérisation de butadiène en l'absence d'un co-catalyseur,

b) qu'on prépare ensuite un bloc B soit en polymérisant un mélange de butadiène et d'isoprène en l'absence d'un cocatalyseur, soit du butadiène en présence d'un co-catalyseur, et

c) qu'on prépare un bloc C en polymérisant un mélange de butadiène et d'isoprène en présence d'un co-catalyseur.

**7.** Procédé suivant la revendication 6, caractérisé par le fait qu'on met en place dès le début de la polymérisation la totalité de la quantité de butadiène et démarre le bloc B par addition du co-catalyseur ou de l'isoprène.

**8.** Procédé suivant les revendications 6 et 7, caractérisé par le fait qu'on met en place dès la phase B du procédé la totalité de la quantité d'isoprène et démarre la polymérisation du bloc C par addition du co-catalyseur.

**9.** Procédé suivant les revendications 6 à 8, caractérisé par le fait que dans les phases opératoires b) et/ou c) du procédé, on ajoute du styrène à titre de comonomère.

**10.** Procédé suivant les revendications 6 à 9, caractérisé par le fait qu'on met en oeuvre un composé d'alkyl-lithium.

**11.** Procédé suivant les revendications 6 à 10, caractérisé par le fait que l'on utilise comme co-catalyseurs des éthers du glycol répondant à la formule

$R_1\ (O\text{-}CH_2\text{-}CH_2)_n\text{-}O\text{-}R_2$

où n = 1 ou 2, et $R_1$ et $R_2$ sont chacun un radical alkyle comportant de 1 à 4 atomes de carbone.

**12.** Procédé suivant la revendication 11, caractérisé par le fait que n = 1 et que les radicaux alkyles $R_1$ et $R_2$ de l'éther glycolique présentent chacun un nombre différent d'atomes de carbone.

**13.** Procédé suivant les revendications 6 à 12, caractérisé par le fait que l'on fait réagir sur un agent de copulation les polymères obtenus après polymérisation complète.

**14.** Procédé suivant les revendications 6 à 13, caractérisé par le fait qu'on exécute au moins l'une des phases du procédé de polymérisation en présence de divinylbenzène.

**15.** L'utilisation des produits de copolymérisation en bloc du type ABC suivant les revendications 1 à 5 pour la fabrication des bandes de roulement de pneumatiques.

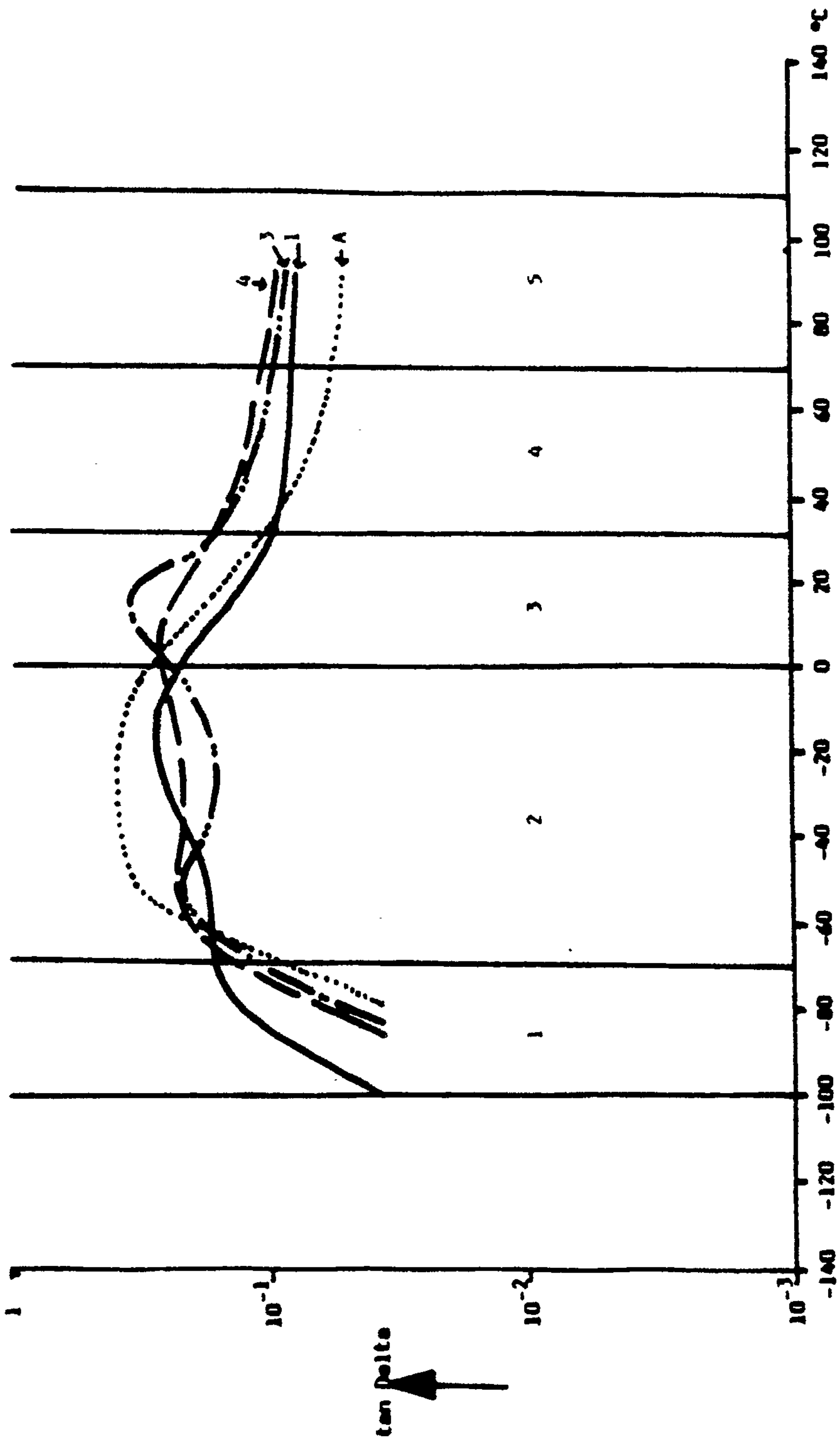
tan Delta
1
$10^{-1}$
$10^{-2}$
$10^{-3}$
-140
-120
-100
-80
-60
-40
-20
0
20
40
60
80
100
120
140 °C
1
2
3
4
5
A

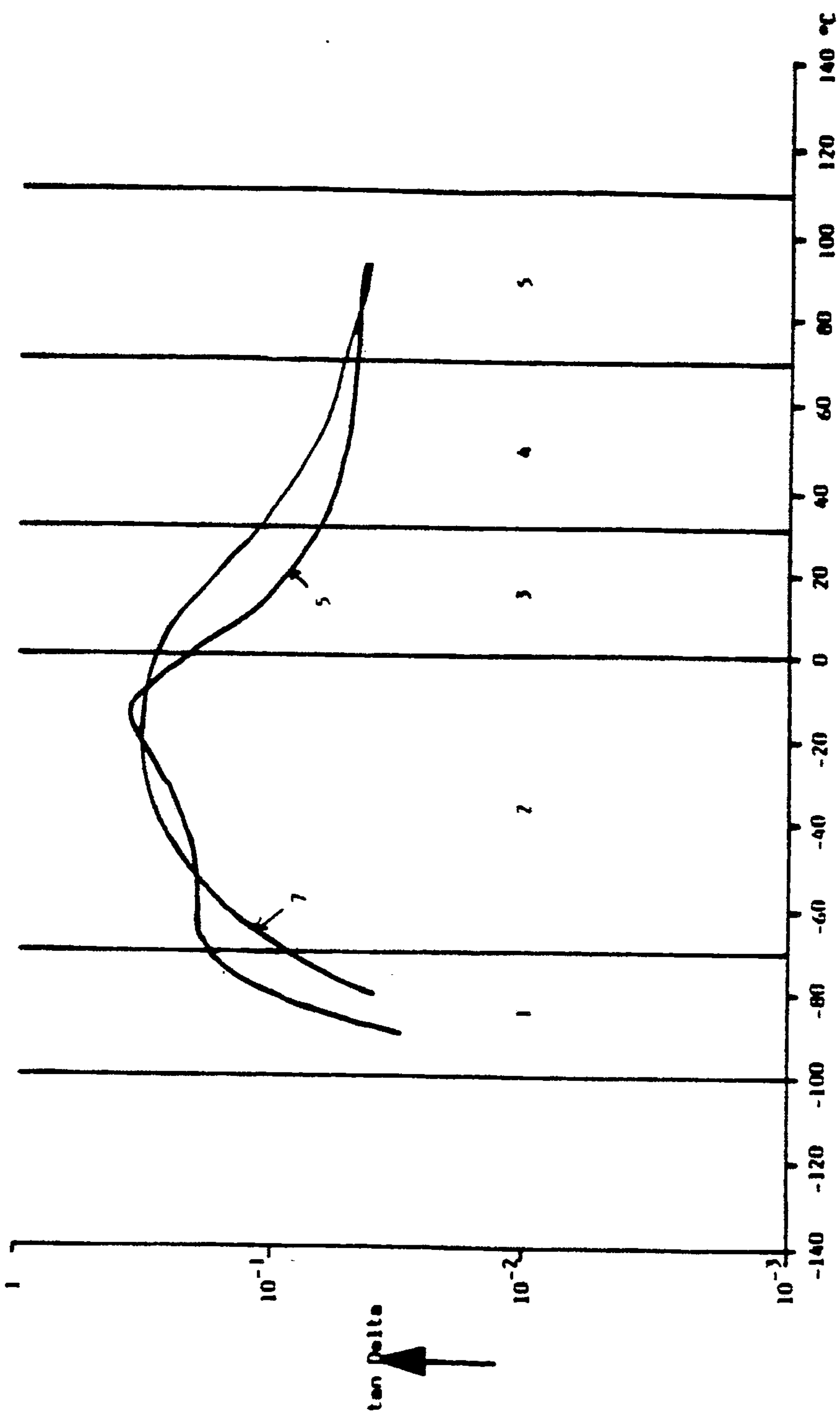

°C
140
120
100
80
60
40
20
0
-20
-40
-60
-80
-100
-120
-140
1
10^-1
10^-2
10^-3
tan Delta
1
2
3
4
5
5
7